# EUROPEAN PATENT SPECIFICATION

(11) **EP 0 475 689 B1**
(45) Date of publication and mention of the grant of the patent: **02.01.1997**
(21) Application number: 91308160.0
(22) Date of filing: 06.09.1991
(51) Int. Cl.: G11B 5/86

(54) **Video signal duplicating systems**
Videosignal - Duplizierungssysteme
Systèmes de duplication de signal vidéo

(30) Priority: 10.09.1990 JP 239281/90
(43) Date of publication of application: 18.03.1992
(73) Proprietor: SONY CORPORATION, Tokyo 141 (JP)
(72) Inventor: Nagasawa, Fumihiro, c/o Patents Div., Shinagawa-ku Tokyo (JP)
(74) Representative: Pilch, Adam John Michael

(56) References cited:
- EP-A- 0 261 826
- US-A- 4 888 653
- US-A- 4 899 230
- PATENT ABSTRACTS OF JAPAN vol. 10, no. 12 (P-421)17 January 1986 & JP-A-60 167 124
- PATENT ABSTRACTS OF JAPAN vol. 12, no. 58 (P-669)20 February 1988 & JP-A-62 202 332
- PATENT ABSTRACTS OF JAPAN vol. 14, no. 341 (P-1081)24 July 1990 & JP-A-21 18 903

## Description

This invention relates to video signal duplicating systems in which a video signal reproduced from a first record medium is duplicated on to a second record medium. More particularly, this invention relates to such a system in which the video signal is duplicated at a speed higher than the normal playback speed.

When video information such as a movie or the like is reproduced from a video tape and recorded on another video tape, it is known for a playback video tape recorder (VTR) and a recording VTR both to be driven at a speed, for example, twice as high as the normal speed so that a twice normal speed reproduced signal is supplied to the recording VTR in order to reduce the duplicating time.

In order to obtain the twice normal speed reproduced signal, the following two methods have been proposed. In a first method, the transport speed of the video tape (record medium) and the driving speed of the reproducing system such as a rotary head drum or the like are doubled. In a second method, the number of playback heads mounted on the rotary head drum is doubled.

However, according to the first method, the rotational speed of the rotary head must be significantly increased. For example, in a VTR of the so-called D2 type such as that described in US Patent No. US-A-5 012 361, the rotational speed of the rotary head reaches 10800 r.p.m. so that, in actual practice, various technical problems must be solved in order to achieve the higher speed. Furthermore, since a signal of frequency band twice the normal frequency band is delivered from the playback head, the signal processing system of the existing VTR must be modified in order to handle the increased frequency band.

The second method, on the other hand, needs a special rotary head drum and a special playback head, and also needs two signal processing systems, which requires the existing VTR to be modified considerably.

Therefore, in the application of the above two methods, the development period of the VTR is extended and the development cost is also increased. As a result, these methods cannot satisfy a user's requirements at an early stage.

According to this invention there is provided a video signal duplicating system in which an original video signal reproduced from n first video tapes is duplicated on to a second video tape, the system comprising:
n video tape recorders each for transporting a respective one of the n first video tapes at a speed n times higher than the normal transport speed and concurrently reproducing video signals from said n first video tapes at positions offset by one frame each, the rotational speed of the rotary head drum of each of said video tape recorders being equal to its rotational speed in a normal reproducing speed mode;
signal processing means for timebase-compressing by a factor n, or time-compressing by a factor n and delaying, the video signals reproduced by said n video tape recorders and for deriving from these compressed video signals a processed signal corresponding to the original video signal reproduced at n times the normal reproducing speed; and
a recording video tape recorder for recording the processed signal from said signal processing means on said second video tape at a speed n times higher than the normal recording speed, n being an integer greater than 1.

A preferred embodiment of the invention, described below in more detail, provides an improved video signal duplicating system in which the above-mentioned shortcomings and disadvantages encountered with the previous proposals can be reduced or overcome.

More specifically, the preferred embodiment provides a video signal duplicating system in which a video signal can be duplicated at a speed n times higher than the normal speed without increasing the rotational speed of the rotating heads of the playback video tape recorders more than the normal rotational speed. Preferably n is an even number such as 2, 4, 6, 8, 16 ..... .

The invention will now be described by way of example with reference to the accompanying drawings, throughout which like parts are referred to by like references, and in which:
Figure 1 is a schematic block diagram showing a video signal duplicating system according to an embodiment of the present invention;
Figure 2 is a schematic representation used to explain the operation of the video signal duplicating system shown in Figure 1; and
Figure 3 is a schematic block diagram showing an example of a video or audio processor used in the video signal duplicating system shown in Figure 1.

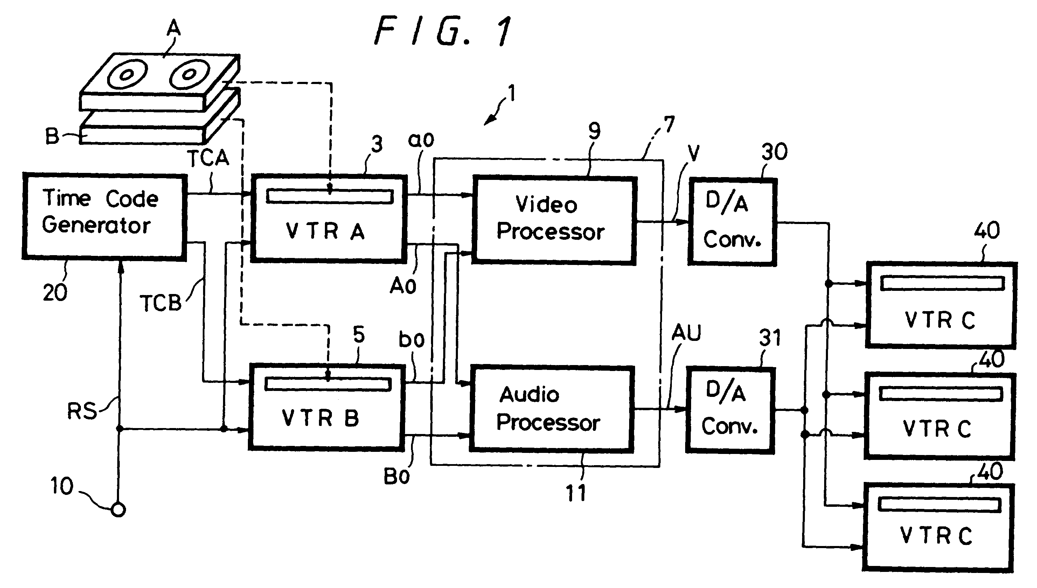

Referring to Figure 1, in a video signal duplicating system 1, video tapes (record media) A, B are respectively loaded into two (n = 2) digital VTRs 3, 5.

The same information signal (for example, video and audio signals of a movie) is recorded on the video tapes A, B and the two VTRs 3, 5 are driven in phase with each other by a playback operation instruction signal RS supplied thereto from an external control apparatus (not shown) through a terminal 10 and also by means of output signals TCA, TCB from a time code generator 20 also receiving the playback operation instruction signal RS.

Reproduced signals from the VTRs 3, 5 are supplied to a signal processor 7, in which they are processed in a manner to be described to provide twice normal speed reproduced signals.

In this embodiment, a video signal a₀ and an audio signal A₀ from the VTR 3, and a video signal b₀ and an audio signal B₀ from the VTR 5, are processed to provide the twice normal speed reproduced signals. In this case, the audio signals A₀, B₀ are processed in a similar manner to the video signals a₀, b₀ and therefore only the processing procedure of the video signals a₀, b₀ will be described below.

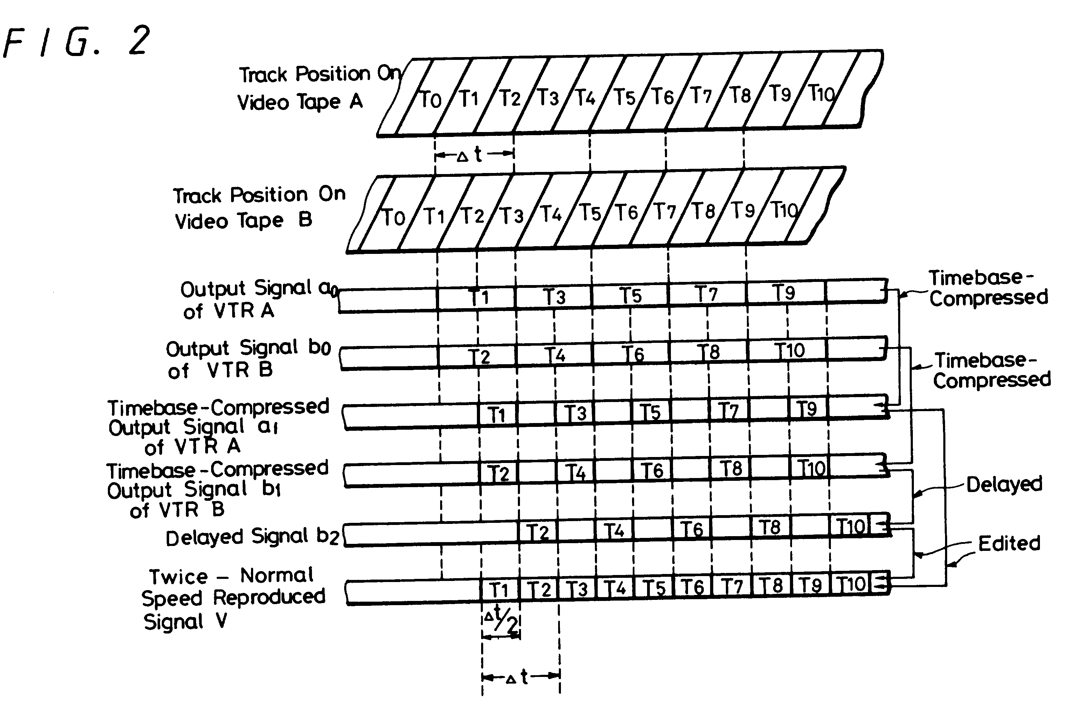

At the beginning of the process, as shown in Figure 2, the playback start position of the video tape B is located at a position (track T₂) which is offset by one frame from the playback start position ( track T₁ ) of the video tape A. Also, the VTRs 3 and 5 are driven in phase with each other so that the video tapes A, B start being reproduced at the same time.

In the example of Figure 2, the time code TCB is supplied from the time code generator 20 to the VTR 5 by a time Δt of one frame before the time code TCA supplied to the VTR 3, whereby the reproduction start position of the video tape B is offset by one frame.

Driving portions of the playback systems, such as rotary head drums or the like of the VTRs 3, 5, are placed in the normal speed mode, that is, in the mode in which all tracks T₀ to T₁₀ are sequentially scanned to provide a normal image. In this case, the tracking control is carried out by using a piezoelectric element (thus providing dynamic tracking playback) and the two video tapes A, B are transported at a speed twice as high as the transport (drive) speed of the standard speed mode.

By this reproducing method, the VTR 3 derives the signal a₀ (contents of tracks T₁, T₃, T₅, T₇, T₉) and the VTR 5 derives the signal b₀ (contents of tracks T₂, T₄, T₆, T₈, T₁₀), respectively. In Figure 2, Δt is selected to be, for example, one-thirtieth of a second.

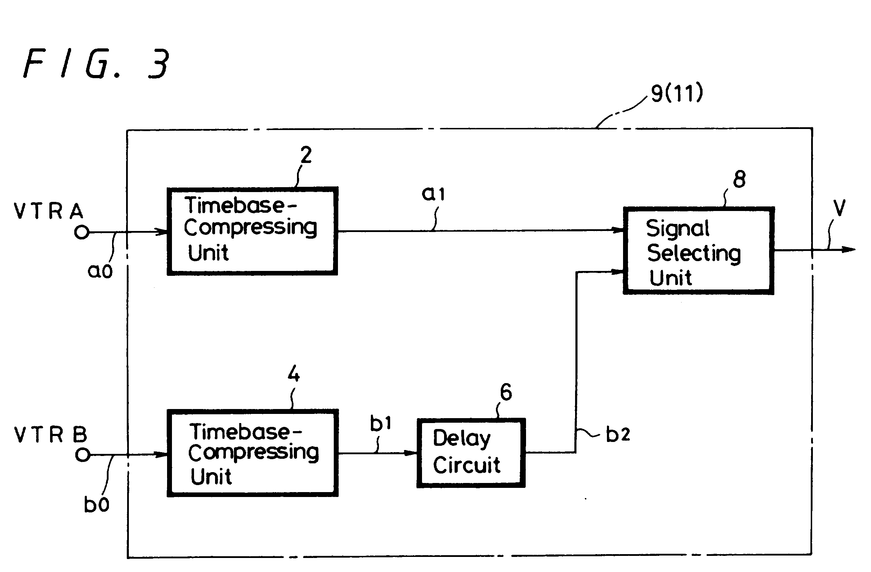

In the next part of the process, the signals a₀, b₀ are supplied to a video processor 9 of the signal processor 7 and from Figure 3, it will be seen that the signals a₀, b₀ are respectively supplied to timebase-compressing units 2 and 4.

In the timebase-compressing units 2 and 4, the signals a₀ and b₀ are timebase-compressed to Δt/2, thereby producing timebase-compressed signals a₁, b₁, respectively.

In the final part of the process, the signal a₁ is supplied to a signal selecting unit 8 and the signal b₁ is supplied through a delay circuit 6 to the signal selecting unit 8. In this case, since the signal b₁ is delayed by a delay time of Δt/2 by the delay circuit 6, the resulting delayed signal b₂ is supplied to the signal selecting unit 8 after the signal a₁ by the delay time Δt/2.

The signal selecting unit 8 functions such that the signals a₁, b₁ sequentially supplied thereto are produced in the sequential order of the video signals recorded in the video tape A (or B) in the early stage (namely in the sequential order of the tracks T₁ to T₁₀), whereby the content of each of the tracks T₁ to T₁₀ falls within the time Δt/2. As a consequence, the signal selecting unit 8 derives a reproduced signal V which is effectively a representation of the video signal of the video tape A at a speed twice as high as the normal speed, and this reproduced signal V is provided as an output of the video processor 9.

In a like manner, the audio signals A₀, B₀ respectively reproduced from the VTRs 3, 5 are delivered from the audio processor 11 as a twice normal speed reproduced audio signal AU.

In general, when the video signals a₀, b₀ are obtained by DT playback, the colour framings in the playback mode must be made coincident with each other, for example, by a professional VTR. As a consequence, if the playback operation instruction signal RS is not coincident with the colour framing in the recording mode of the video signal on the video tape A, then processing for making the colour framings of the reproduced signals coincident must be carried out. In this embodiment, however, the colour framing must only be coincident with that of the finally obtained signal V so that the processing for making the colour framings of both reproduced signals coincident is not needed.

Further, although interpolation processing may generally be carried out for interpolating discontinuous portions of the audio signals A₀, B₀, the final signal AU may be found to be sufficiently continuous without such interpolation processing.

The reproduced signals V and AU derived from the digital VTRs 3, 5, and which are then processed as the twice normal speed signals by respective digital-to-analog (D/A) converters 30, 31, are duplicated on video tape by a plurality of analog VTRs 40 which can record the signal at twice normal speed.

As described above, according to this embodiment, the video tape B starts being reproduced from a position offset from the video tape A by one frame and the reproduced signals a₀, b₀ from the VTRs 3, 5 are each timebase-compressed by Δt/2 to produce timebase-compressed signals a₁, b₁.

The signal b₁ is then delayed by a delay time of Δt/2 to produce the delayed signal b₂ which is supplied to the signal selecting unit 8, and the signals a₁, b₂ are alternately selected and output by the signal selecting unit 8, thereby forming the final twice normal speed reproduced signal V. Accordingly, the VTRs 3, 5 can be designed by carrying out only a small modification, for example by removing the arrangements for effecting reproduced signal coincident colour framing and interpolation processing.

Therefore, since the development period of the VTRs 3, 5 can be reduced, a video signal duplicating system embodying the present invention can provide improved economy, such as a reduction in the development cost. Also, a video signal duplicating system embodying the present invention can satisfy the requirements of a user at an early stage due to the reduced development period, and can result in improvements from a user services standpoint.

The video signal duplicating system is not limited to the two VTRs 3, 5 and can be applied to reproduction performed by n VTRs and n video tapes, n preferably being an even number, for example, n = 4, 6, 8 or 16.

As will be understood from the above description, according to the video signal duplicating system of the present invention, information signals offset by one frame each are reproduced from n record media, the reproduced signals are timebase-compressed by 1/n and organised in the recording order of the original information signals, whereby n times normal speed reproduced signals (at a speed n times higher than the normal speed) are obtained.

## Claims

1. A video signal duplicating system (1) in which an original video signal reproduced from n first video tapes (A, B) is duplicated on to a second video tape, the system (1) comprising:
n video tape recorders (3, 5) each for transporting a respective one of the n first video tapes (A, B) at a speed n times higher than the normal transport speed and concurrently reproducing video signals from said n first video tapes (A, B) at positions offset by one frame each, the rotational speed of the rotary head drum of each of said video tape recorders (3, 5) being equal to its rotational speed in a normal reproducing speed mode;
signal processing means (7) for timebase-compressing by a factor n, or time-compressing by a factor n and delaying, the video signals reproduced by said n video tape recorders (3, 5) and for deriving from these compressed video signals a processed signal (V) corresponding to the original video signal reproduced at n times the normal reproducing speed; and
a recording video tape recorder (40) for recording the processed signal (V) from said signal processing means (7) on said second video tape at a speed n times higher than the normal recording speed, n being an integer greater than 1.

2. A system (1) according to claim 1, comprising a time code generator (20) for supplying reference time code signals (TCA, TCB) to said n video tape recorders (3, 5) such that said time code signals (TCA, TCB) for each of said video tape recorders (3, 5) differ from each other by a time corresponding to one frame.

3. A system (1) according to claim 1 or claim 2, wherein said signal processing means (7) comprises n timebase-compressing means (2, 4) for compressing the time bases of video signals supplied from said n video tape recorders (3, 5) by 1/n, (n-1) delay means (6) applied to output signals from respective ones of said timebase-compressing means (2, 4) and for delaying the respective signals applied thereto by a predetermined delay time (Δt), and signal selecting means (8) for selectively outputting output signals of said (n-1) delay means (6) and of said timebase-compressing means (2, 4) to form said processed signal (V).

4. A system (1) according to claim 3, including digital-to-analog converting means (30, 31) supplied with the output signals of said signal processing means (7) for converting said signals supplied thereto into analog signals.

5. A system (1) according to claim 4, wherein said recording video tape recorder is an analog video tape recorder (40).

6. A system (1) according to any one of the preceding claims, wherein n is an even number.

## Patentansprüche

1. Videosignal-Vervielfältigungssystem, bei dem ein Original-Videosignal, das von n ersten Videobändern (A, B) wiedergegeben ist, auf ein zweites Videoband vervielfältigt wird, wobei das System (1) aufweist:
- n Videobandrekorder (3, 5), wobei jeder ein jeweiliges der n ersten Videobänder (A, B) mit einer Geschwindigkeit transportiert, die n-fach größer als die normale Transportgeschwindigkeit ist und gleichzeitig Videosignale von den n ersten Videobändern (A, B) an Stellen wiedergeben, die um ein Vollbild von einander beabstandet sind, wobei die Drehgeschwindigkeit der Drehkopftrommel von jedem der Videobandrekorder (3, 5) gleich der Drehgeschwindigkeit in einem normalen Wiedergabemodus ist,
- eine Signalverarbeitungseinrichtung (7), um die von den n Videobandrekordern (3, 5) wiedergegebenen Videosignale um einen Faktor n in der Zeitbasis zu komprimieren oder um einen Faktor n in der Zeit zu komprimieren und zu verzögern, und um von diesen komprimierten Videosignalen ein verarbeitetes Signal (V) abzuleiten, das dem Originalvideosignal entspricht, das mit dem n-Fachen der normalen Wiedergabegeschwindigkeit wiedergegeben ist, und
- einen Aufzeichnungs-Videobandrekorder (40), um das von der Signalverarbeitungseinrichtung (7) verarbeitete Signal (V) auf dem zweiten Videoband mit einer Geschwindigkeit aufzuzeichnen, die n-mal höher als die normale Aufzeichnungsgeschwindigkeit ist, wobei n eine ganze Zahl größer als 1 ist.

2. System nach Anspruch 1, mit einem Zeitcode-Generator (20), um Bezugszeitcode-Signale (TCA, TCB) den n Videobandrekordern (3, 5) zuzuführen, so daß sich die Zeitcode-Signale (TCA, TCB) für jeden der Videobandrekorder (3, 5) voneinander um eine einem Vollbild entsprechende Zeit unterscheiden.

3. System nach Anspruch 1 oder Anspruch 2, bei dem die Signalverarbeitungseinrichtung (7) n Zeitbasis-Komprimiereinrichtungen (2, 4), um die Zeitbasen der von den n Videobandrekorder (3, 5) zugeführten Videosingale um 1/n zu komprimieren, (n-1)-Verzögerungseinrichtungen (6), denen die Ausgangssignale von den jeweiligen Zeitbasis-Komprimiereinrichtungen (2, 4) zugeführt werden, um die jeweils zugeführten Signale um eine vorbestimmte Verzögerungszeit (Δt) zu verzögern, und eine Signalerfassungseinrichtung (8) aufweist, um selektiv Ausgangssignale der (n-1)-Verzögerungseinrichtungen (6) und der Zeitbasis-Koprimiereinrichtungen (2, 4) auszugeben, um das verarbeitete Signal (V) zu bilden.

4. System nach Anspruch 3, das eine Digital/-Analog-Umwandlungseinrichtung (30, 31) enthält, der die Ausgangssignale der Signalverarbeitungseinrichtung (7) zugeführt werden, um die zugeführten Signale in Analogsignale umzuwandeln.

5. System nach Anspruch 4, bei dem der Aufzeichnungs-Videobandrekorder ein Analog-Videobandrekorder (40) ist.

6. System (1) nach einem der vorhergehenden Ansprüche, bei dem n eine geradzahlige Ziffer ist.

## Revendications

1. Système de duplication de signal vidéo (1) dans lequel on duplique un signal vidéo d'origine, reproduit à partir de n premières bandes vidéo (A, B), sur une seconde bande vidéo, le système (1) comprenant :
n magnétoscopes (3, 5), chacun pour faire défiler l'une respective des n premières bandes vidéo (A, B) à une vitesse n fois plus grande que la vitesse normale de défilement et pour reproduire concurremment des signaux vidéo provenant desdites n premières bandes vidéo (A, B) dans des positions décalées chacune d'une image, la vitesse de rotation du tambour rotatif de têtes de chacun desdits magnétoscopes (3, 5) étant égale à sa vitesse de rotation dans un mode à vitesse normale de reproduction ;
un moyen de traitement de signaux (7) pour comprimer en base de temps par un facteur n, ou pour comprimer en base de temps par un facteur n et retarder, les signaux vidéo reproduits par lesdits n magnétoscopes (3, 5) et pour obtenir, à partir de ces signaux vidéo comprimés, un signal traité (V) correspondant au signal vidéo d'origine reproduit à n fois la vitesse normale de reproduction ; et
un magnétoscope d'enregistrement (40) pour enregistrer le signal traité (V), issu dudit moyen de traitement de signaux (7), sur ladite seconde bande vidéo à une vitesse n fois plus élevée que la vitesse normale d'enregistrement, n étant un nombre entier plus grand que 1.

2. Système (1) selon la revendication 1, comprenant un générateur de code temporel (20) pour délivrer des signaux de code temporel de référence (TCA, TCB) auxdits n magnétoscopes (3, 5) de sorte que lesdits signaux de code temporel (TCA, TCB) pour chacun desdits magnétoscopes (3, 5) diffèrent les uns des autres d'un temps correspondant à une image.

3. Système (1) selon la revendication 1 ou la revendication 2, dans lequel ledit moyen de traitement de signaux (7) comprend n moyens de compression de base de temps (2, 4) pour comprimer, de 1/n, les bases de temps de signaux vidéo délivrés à partir desdits n magnétoscopes (3, 5) ; (n-1) moyens de retardement (6) appliqués aux signaux de sortie de certains, respectifs, desdits moyens de compression de base de temps (2, 4) et pour retarder, d'un temps de retard prédéterminé (Δt), les signaux respectifs qui leur sont délivrés ; et un moyen de sélection de signal (8) pour sortir de manière sélective des signaux de sortie desdits (n-1) moyens de retardement (6) et desdits moyens de compression de base de temps (2, 4) pour former ledit signal traité (V).

4. Système (1) selon la revendication 3, incluant des moyens de conversion de numérique en analogique (30, 31) alimentés avec les signaux de sortie dudit moyen de traitement de signaux (7) pour convertir lesdits signaux qui leur sont délivrés en des signaux analogiques.

5. Système (1) selon la revendication 4, dans lequel ledit magnétoscope d'enregistrement est un magnétoscope analogique (40).

6. Système (1) selon l'une quelconque des revendications précédentes, dans lequel n est un nombre pair.
